# EUROPÄISCHE PATENTSCHRIFT

(11) **EP 1 812 940 B1**
(45) Veröffentlichungstag und Bekanntmachung des Hinweises auf die Patenterteilung: **09.12.2009**
(21) Anmeldenummer: 05794271.6
(22) Anmeldetag: 27.10.2005
(51) Int. Cl.: H01H 9/52, H05K 7/20, F28D 15/04

(54) **ISOLIERHOHLKÖRPER FÜR EIN MIT HOCHSPANNUNG BELASTBARES KÜHLELEMENT**
INSULATING HOLLOW BODY FOR A COOLING HIGH-VOLTAGE LOADABLE ELEMENT
CORPS CREUX ISOLANT POUR ELEMENT DE REFROIDISSEMENT POUVANT ETRE SOUMIS A UNE HAUTE TENSION

(30) Priorität: 16.11.2004 EP 04405704
(43) Veröffentlichungstag der Anmeldung: 01.08.2007
(73) Patentinhaber: ABB RESEARCH LTD., 8050 Zürich (CH)
(72) Erfinder: KIEFER, Jochen, CH-5415 Nussbaumen (CH); LAKNER, Martin, CH-5412 Gebenstorf (CH); CHARTOUNI, Daniel, CH-5400 Baden (CH); MAUROUX, Jean-Claude, CH-5502 Hunzenschwil (CH); RITZER, Leopold, CH-5417 Untersiggenthal (CH); UNTERNAEHRER, Peter, CH-5436 Würenlos (CH); SCHOENEMANN, Thomas, CH-5503 Schafisheim (CH); ZEHNDER, Lukas, CH-5405 Dättwil (CH); MOLLENKOPF, Marc, CH-4127 Birsfelden (CH)
(74) Vertreter: ABB Patent Attorneys
(86) Internationale Anmeldenummer: PCT/CH2005/000629
(87) Internationale Veröffentlichungsnummer: WO 2006/053452

(56) Entgegenhaltungen:
- EP-A- 0 242 669
- DE-A1- 2 238 987
- US-A- 3 662 137
- US-A- 4 005 297
- G. YALE EASTMAN: "The Heat Pipe" SCIENTIFIC AMERICAN, Bd. 218, 31. Mai 1968 (1968-05-31), Seiten 38-46, XP008058156 USA

## Beschreibung

### TECHNISCHES GEBIET

Die vorliegende Erfindung bezieht sich auf ein Isolierrohr für ein mit Hochspannung belastbares Kühlelement, ein dieses Isolierrohr enthaltendes Kühlelement sowie auf Verfahren zur Herstellung des Isolierrohrs.

Hochspannung ist hierbei grundsätzlich als Betriebsspannung grösser 1 kV zu verstehen. Der bevorzugte Spannungsbereich liegt unterhalb 100 kV und betrifft vor allem hochstromführende Apparate und Anlagen mit Nennspannungen von typischerweise 10 bis 50 kV.

Die Stromtragfähigkeit solcher Apparate und Anlagen ist thermisch begrenzt. Für den unteren Nennstrombereich werden passive Kühlelemente, wie z.B. Kühlrippen, eingesetzt. Die Möglichkeiten mit konventionellen passiven Kühlelementen den Nennstrombereich zu erhöhen sind allerdings sehr begrenzt. Deshalb werden bei höheren Nennströmen, wie sie etwa in als Generatorschalter ausgebildeten Hochstromgeräten geführt werden, aktive Kühlelemente (z.B. Luft-Luft-Wärmetauscher mit Ventilatoren) eingesetzt.

Neben solchen aktiven sind bereits auch leistungsstarke, passive Kühlelemente zur Verwendung in Hochstromschaltgeräten vorgeschlagen worden. Solche leistungsstarken, passiven Kühlelemente umfassen Thermosiphons (heat pipes). Bei Thermosiphons wird die im Schalter durch Stromverluste entstehende Wärme zum Verdampfen eines Arbeitsmittels benutzt. Das verdampfte Arbeitsmittel wird zu einem externen Wärmetauscher transportiert und gibt dort durch Kondensation die im Schalter gebildete Verlustwärme wieder ab.

Generatorschalter sind in der Regel einphasig gekapselt ausgeführt und weisen einen in der Kapselung angeordneten und auf Hochspannungspotential befindlichen Innenleiter auf. Durch Stromverluste am Innenleiter gebildete Wärme ist durch die geerdete Kapselung hindurch an die Umgebungsluft abzuführen. Dies bedeutet, dass sich zwischen einem auf Hochspannungspotential befindlichen Verdampfer und einem auf Erdpotential gehaltenen Kondensator des Thermosiphons eine elektrisch isolierende Strecke befinden muss, die entsprechend der geforderten Hochspannung (z.B. 150 kV BIL) ausgelegt sein muss. Verdampfer und Kondensator sind an den beiden Enden eines Isolierhohlkörpers vakuumfest gehalten.

Da bei einem solchen leistungsstarken, passiven Kühlelement bewegte Teile, wie Ventilatoren oder Gebläse, entfallen, kann mit diesem Kühlelement die Verlustwärme preiswert und effizient aus der Kapselung entfernt werden. Der Isolierhohlkörper erfüllt hierbei mehrere Funktionen, vor allem die des Führens des Arbeitsmittels und die des Trennens der Potentiale von Verdampfer und Kondensator. Die Zuverlässigkeit eines solchen leistungsstarken passiven Kühlelements und einer mit einem solchen Kühlelement ausgerüsteten Hochspannungsanlage ist nur dann gewährleistet, wenn das Isolierrohr die vorgenannten Funktionen über viele Jahre erbringt.

### STAND DER TECHNIK

Ein Isolierrohr der vorgenannten Art ist beschrieben in DE 22 38 987 A1. Dieses Isolierrohr bildet zusammen mit einem an einem seiner Enden angebrachten Metallzylinder und einem am entgegengesetzten Ende angebrachten Kühl- und Abschlusselement ein Wärmerohr. Mit diesem Wärmerohr wird in einem flüssigkeitsarmen Schalter durch dessen Betriebsstrom erzeugte Verlustwärme vom Schalter weggeführt. Die Verlustwärme wird hierbei vom Wärmerohr durch Verdampfen einer Flüssigkeit, beispielsweise eines Fluor-Carbons, in dem an verlustwärmebildenden Teilen des Schalters befestigten Metallzylinder aufgenommen und durch Kondensation des Flüssigkeitsdampfs am Kühl- und Abschlusselement an die Umgebung abgegeben. Das Isolierrohr kann aus einem glasfaserverstärkten Epoxidharz oder dergleichen bestehen und ist im Inneren eines mit Löschflüssigkeit gefüllten und vom Kühl- und Abschlusselement abgeschlossenen Polrohrs angeordnet. Die einzelnen Teile des Wärmerohrs sind durch geeignete Dichtungen oder durch Verklebung vakuumdicht miteinander verbunden. Durch eine die Innenwand des Isolierrohrs auskleidende Kapillarstruktur wird ein waagrechter Einbau des Wärmerohrs ermöglicht.

Eine metallgekapselte Schaltanlage mit Wärmerohren ist in US 3,662,137 A und US 4,005,297 A beschrieben. Jedes Wärmerohr kann aus Isoliermaterial bestehen. Das Wärmerohr weist dann einen aus Keramik ausgeführten Behälter zur Aufnahme eines Arbeitsmittels, beispielweise eines fluorierten Kohlenwasserstoffs, auf sowie eine im Behälter angeordnete Kapillarstruktur aus Glasfasern.

Ein Wärmerohr zur Verwendung in elektrischen Hochspannungsstromkreisen ist dargestellt in G.Yale Eastman: "The Heat Pipe" Scientific American, Bd. 218 (31. Mai 1968), Seiten 38-46, insbesondere Seite 42. Dieses Wärmerohr ist ausschliesslich aus Isoliermaterial hergestellt und enthält einen Glasbehälter, in dem eine Kapillarstruktur aus Glasfasern und fluorierter Kohlenwasserstoff als Arbeitsmittel des Wärmerohrs angeordnet sind.

EP 242 669 A zeigt eine wärmeaufnehmende Komponente eines kapillargepumpten Kühlkreislaufs, bei der das Kapillarmaterial poröser Kunststoff, wie Polytetraflurethylen, Polyethylen oder Polystryrol, ist.

Ein Kühlelement mit einem Isolierhohlkörper ist aus DE 2 051 150 A vorbekannt. Der Isolierhohlkörper ist als hohler Stützisolator ausgebildet und hält eine auf Hochspannungspotential befindliche Leiterbahn eines Schalterpols mit Abstand zur Wand eines mit einer Schaltflüssigkeit gefüllten Polgehäuses. An der Wand ist ein Kühler gehalten, der über zwei im Stützisolator angeordnete Durchflussleitungen mit einem die Strombahn umgebenden Ringraum verbunden ist. In Kühler, Durchflussleitungen und Ringraum befindet sich ein Verdampfungsmittel. Ein in der Strombahn geführter Strom erwärmt über die Schaltflüssigkeit den im Ringraum befindlichen Teil des Verdampfungsmittels. Hierbei gebildeter Dampf wird über eine der beiden Durchflussleitungen in den Kühler geführt, in dem er unter Abgabe der beim Verdampfen aufgenommenen Wärme kondensiert. Das entstehende Kondensat sinkt im Kühler ab und drückt im Kühler befindliches flüssiges Värdampfungsmittel durch die andere Durchflussleitung wieder zurück in den Ringraum, in dem für das zugeführte flüssige Verdampfungsmittel ein neuer Verdampfungs-Kondensations-Zyklus eingeleitet wird.

### DARSTELLUNG DER ERFINDUNG

Der Erfindung, wie sie in den Patentansprüchen angegeben ist, liegt die Aufgabe zugrunde, ein Isolierrohr der eingangs genannten Art zu schaffen, welches einfach gefertigt und leicht in ein Kühlelement eingebaut werden kann, das sich auch nach langjährigem Betrieb unter starker elektrischer, thermischer und chemischer Belastung noch durch eine grosse Betriebssicherheit auszeichnet, sowie vorteilhafte Verfahren zur Herstellung dieses Isolierrohrs anzugeben.

Das Isolierrohr nach der Erfindung weist ein mechanisch tragendes Kunststoffrohr aus einem faserverstärktem Polymer auf sowie eine vom Kunststoffrohr koaxial gehaltene Diffusionsbarriere. Ein solcher Aufbau stellt sicher, dass das Isolierrohr die in einem Kühlelement einer Hochspannungsanlage anfallenden Anforderungen zuverlässig erfüllt. Das Kunststoffrohr kann nämlich die bei der Montage und dem Betrieb des Kühlelements anfallenden mechanischen und thermischen Belastungen aufnehmen, so dass für die Diffusionsbarriere Werkstoffe ausgewählt werden können, die wie insbesondere Glas oder Keramik, zwar vergleichsweise spröde sind, jedoch Diffusionsvorgänge besonders wirksam hemmen. Da die Diffusionsbarriere wegen der Entlastung durch das Kunststoffrohr mechanisch wenig beansprucht ist, heben selbst gegebenenfalls auftretende Risse in der Diffusionsbarriere die diffusionshemmende Wirkung dieser Barriere nicht auf. Solche Risse sind nämlich nicht mit nennenswerten Kräften belastet und können sich während des Betriebs des Kühlelements nicht wesentlich vergrössern. Eine ausreichende Diffusionshemmung ist daher stets gewährleistet. Zudem können in fertigungstechnisch besonders vorteilhafter Weise, insbesondere durch Kleben, an den Enden des Kunststoffrohrs Metallarmaturen angebracht werden, welche der Befestigung wesentlicher Teile des Kühlelements dienen, wie dem Verdampfer, dem Kondensator oder einem Faltenbalg zum Dehnungsausgleich und zur Aufnahme mechanischer Kräfte, welche beispielsweise durch Erschütterungen Schwingungen in das Kühlelement eingeleitet werden. Darüber hinaus verhindern die im Kunststoffrohr vorgesehenen Fasern ein Splittern des Isolierrohrs und erhöhen dadurch die Betriebssicherheit des mit diesem Rohr ausgerüsteten Kühlelements wie auch einer Hochspannungsanlage, in der dieses Kühlelement eingebaut ist.

Da Glas und Keramik auch bei hohen Temperaturen gegen die im Kühlelement eingesetzten, gegebenenfalls chemisch aggressiven, Arbeitsmittel resistent sind, ist als Diffusionsbarriere mit Vorteil ein Glas- oder Keramikrohr vorgesehen, welches an der Innenseite des Kunststoffrohrs angeordnet ist. Wegen der geringen Duktilität von Glas und Keramik empfiehlt es sich, zwischen Kunststoffrohr und Glas- oder Keramikrohr eine reversibel verformbare Dämpfungsschicht anzuordnen, um so die Diffusionsbarriere vor der Einwirkung mechanischer Kräfte zu schützen. Zudem ist es vorteilhaft, die Innenfläche des Glas- oder Keramikrohrs mit einem vorzugsweise als Folie ausgebildeten Splitterschutz abzudecken. So wird bei einer mechanischen Beschädigung der Diffusionsbarriere ein Abplatzen und Abfallen von Splittern vermieden. Bei der Beschädigung gebildete Risse können sich daher nicht verbreitern, so dass die diffusionshemmende Wirkung der Diffusionsbarriere im wesentlichen erhalten bleibt.

Ein erprobtes Verfahren zur Herstellung des Isolierrohrs ist **dadurch gekennzeichnet, dass** unter Bildung eines Vorformkörpers auf eine Mantelfläche einer als Rohr ausgebildeten Diffusionsbarriere mit Polymer vorimprägniertes oder nicht imprägniertes Fasermaterial gewickelt wird, dass der so gebildete Vorformkörper in einer Form angeordnet und im Falle des nicht imprägniertes Fasermaterial enthaltenden Vorformkörpers mit Polymer getränkt wird, und dass das durch Vorimprägnierung oder Tränken eingebrachte Polymer bei erhöhter Temperatur in der Form ausgehärtet wird.

Liegt die Diffusionsbarriere nicht als vorgefertigtes Rohr vor, so wird in einem anderen Herstellverfahren auf eine Mantelfläche eines entfernbaren Wickelkerns mit Polymer vorimprägniertes oder nicht imprägniertes Fasermaterial aufgewickelt, werden beim Wickeln in das Fasermaterial folienförmig ausgebildete Abschnitte der Diffussionsbarriere eingelegt, wird ein so gebildeter Vorformkörper in einer Form angeordnet und im Falle eines nicht imprägniertes Fasermaterial enthaltenden Vorformkörpers mit Polymer getränkt, und wird anschliessend das durch Vorimprägnierung oder Tränken eingebrachte Polymer bei erhöhter Temperatur in der Form ausgehärtet.

Bei der Herstellung des Isolierrohrs kann die Form entfallen, wenn das Kunststoffrohr und eine als Rohr ausgebildete Diffusionsbarriere vorgefertigt werden, der Aussendurchmesser der Diffusionsbarriere und der Innendurchmesser des Kunststoffrohrs aneinander angepasst werden, und nach Einschieben der Diffusionsbarriere in das Kunststoffrohr beide Rohre miteinander verklebt werden.

Weitere Merkmale und deren vorteilhafte Wirkungen der Erfindung ergeben sich aus dem nachfolgend beschriebenen Ausführungsbeispiel.

### KURZE BESCHREIBUNG DER FIGUREN

Anhand von Zeichnungen wird dieses Ausführungsbeispiel der Erfindung näher erläutert. Hierbei zeigt:
- Fig.1: eine Draufsicht auf einen Abschnitt einer Kühlelemente mit jeweils einem erfindungsgemässen Isolierrohr enthaltenden, gekapselt ausgeführten Hochspannungsanlage, bei der ein nach oben weisender Teil der Kapselung entfernt wurde, und
- Fig. 2: in vergrösserter Darstellung ein in einem der Kühlelemente der Anlage gemäss Fig.1 vorgesehenes Isolierrohr nach der Erfindung.

### WEG ZUR AUSFÜHRUNG DER ERFINDUNG

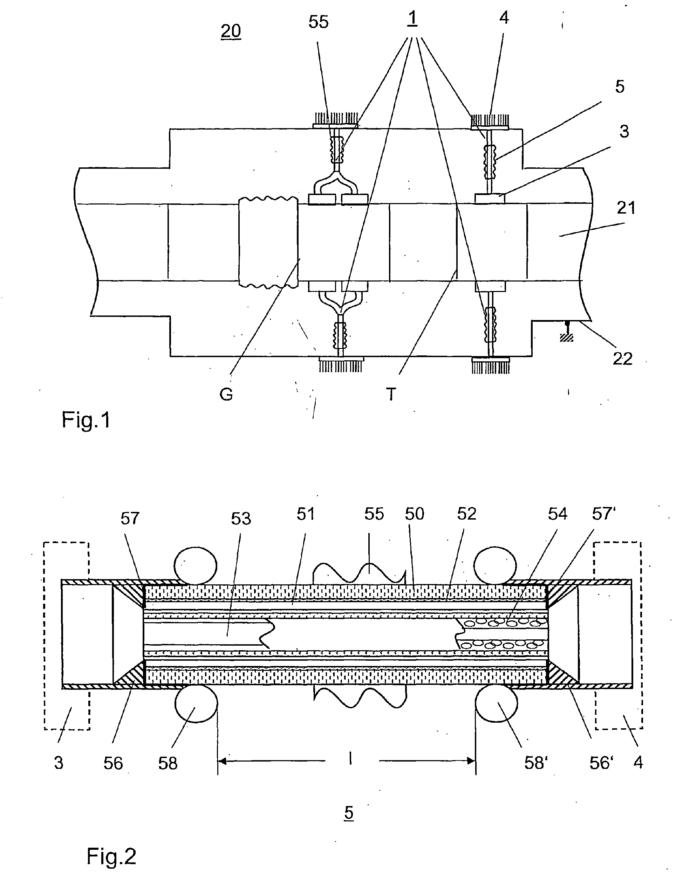

In allen Figuren beziehen sich gleiche Bezugszeichen auf gleichwirkende Teile. Der in Fig.1 dargestellten Abschnitt einer Hochspannungsanlage 20 ist Teil einer Phase einer mehrphasigen Generatorableitung und enthält eine geerdete Metallkapselung 22, einen in der Kapselung gehaltenen Stromleiter 21 sowie Kühlelemente 1. Die Kapselung 22 dient der Führung eines bei Betrieb der Anlage auftretenden Rückstroms, wohingegen der Stromleiter 21 der Führung eines in einem Generator erzeugten Stroms von typischerweise 10 bis 50 kA bei Spannungen von typischerweise 10 bis 50 kV dient. Ersichtlich steht der Stromleiter 21 resp. stehen als Generatorschalter G bzw. als Trennschalter T ausgebildete Abschnitte davon in wärmeleitendem Kontakt mit je zwei der Kühlelemente 1.

Die Kühlelemente 1 weisen jeweils ein abgeschlossenes, vakuumfestes Volumen auf, in dem ein im allgemeinen unter der Wirkung der Schwerkraft oder aber von Kapillarkräften zirkulierbares Arbeitsmittel angeordnet ist. Ein mit Hilfe der Schwerkraft arbeitendes Kühlelement 1 ist daher gegenüber der Horizontalen geneigt angeordnet. Am unteren Ende des Kühlelements 1 befindet sich dann ein Verdampfer 3 und am oberen Ende ein Kondensator 4. Der Verdampfer 3 ist aus Metall gefertigt und ist thermisch an den Stromleiter 21 angekoppelt. Auch der Kondensator 4 ist aus Metall gefertigt. Dieser Kondensator ist auf der Kapselung 22 befestigt, kann aber auch neben der Kapselung 22 montiert sein. Grundsätzlich kann der Kondensator 4 ein separat ausgeführtes Objekt sein, welches ausserhalb der Kapselung 22 angebracht ist und Wärme nach aussen abgibt. Er kann auch thermisch an der Kapselung 22 angekoppelt sein. Im allgemeinen weist er der Heizwirkung des Stromleiters 21 entzogene Kühlrippen auf. Wie aus Fig.1 ersichtlich ist, kann zum Erreichen einer grösseren Verdampferleistung das Kühlelement 1 auch zwei (oder gegebenenfalls auch mehr als zwei) Verdampfer aufweisen. Im Inneren der Kühlelemente 1 können auch vom Verdampfer zum Kondensator 4 erstreckte Kapillaren angeordnet sein. Das im Kondensator 4 verflüssigte Arbeitsmittel wird dann durch Kapillarkräfte vom Kondensator 4 zum Verdampfer 3 zurückgeführt. Ein mit Kapillaren versehenes Kühlelement kann unabhängig von seiner Position, also nach oben, nach unten, horizontal oder schräg nach oben oder nach unten ausgerichtet, in die Anlage 20 eingebaut sein.

Zur Überbrückung der Potentialdifferenz zwischen Verdampfer 3 bzw. Stromleiter 21 und Kondensator 4 bzw. Kapselung 22 ist hierbei ein als Isolierstrecke wirkendes Isolierrohr 5 vorgesehen. Dieses Isolierrohr kann eine in Fig.1 dargestellte, kriechwegverlängernde Beschirmung 55 aufweisen. Das Isolierrohr 5 ist während des Betriebs der Anlage 20 nicht nur hohen elektrischen Belastungen ausgesetzt, sondern zugleich auch thermischen und chemischen Belastungen, welche durch das in seinem Körperinneren als Flüssigkeit und/oder als Dampf zirkulierende Arbeitsmittel hervorgerufen werden.

Im Bereich des Kondensators 4 kann ein nicht dargestellter Auffangbehälter vorgesehen sein, dessen Volumen bei Druckänderungen im Innern des Kühlelements 1 veränderlich ist. Ferner kann im Inneren des Kühlelements ausser dem Arbeitsmedium noch ein Hilfsgas, wie etwa Luft mit einem Partialdruck von einigen hundert mbar, vorgesehen sein, welches auch bei einem geringen Partialdruck des Arbeitsmittels, wie er sich bei tiefen Temperaturen einstellen kann, noch eine gute dielektrische Festigkeit des Kühlelements 1 gewährleistet.

Während des Betriebs erwärmt der im Stromleiter 21 geführte und im Generator erzeugte Nennstrom die Anlage beträchtlich. Da besonders gefährdete Teile der Anlage, beispielsweise den Stromleiter tragende Isolatoren, eine Grenztemperatur von typischerweise 105°C nicht überschreiten dürfen, kann nur ein bestimmter Nennstrom, welcher ohne Kühlung beispielsweise 13 kA betragen darf, geführt werden. Im Verdampfer 3 wird das Arbeitsmittel verdampft und dabei dem Stromleiter 21 Wärme entzogen. Mit einem geeigneten Arbeitsmittel, etwa Aceton oder einem Hydro-Fluor-Äther, kann so trotz eines gegenüber einer ungekühlten Anlage erheblich gesteigerten Nennstroms der Stromleiter 21 unterhalb der Grenztemperatur gehalten werden. Das verdampfte Arbeitsmittel verflüssigt sich unter Abgabe von Kondensationswärme im Kondensator 4 und fliesst infolge der Schwerkraft über das schräg gestellte Kühlelement 1 wieder in den Verdampfer 3 zurück. Weist das Kühlelement Kapillaren auf, so gelangt das verflüssigte Arbeitsmittel infolge der Kapillarkräfte, gegebenenfalls entgegen der Schwerkraft, zum Verdampfer. Um noch rasche Verflüssigung zu erreichen, sollte sich der Kondensator 4 typischerweise allenfalls auf ca. 70°C erwärmen. Durch die geeignet ausgebildeten und geeignet verteilten Kühlelemente in der Anlage kann so der Nennstrom auf beispielsweise 22 kA erhöht werden, ohne die vorgegebene Grenztemperatur zu überschreiten. Da dies jedoch nur mit einwandfrei arbeitenden Kühlelementen 1 möglich ist, ist es für einen sicheren und zuverlässigen Betrieb der Anlage wichtig, dass die Kühlelemente und insbesondere deren Isolierrohre 5 sich durch eine lange Lebensdauer und eine grosse Betriebssicherheit auszeichnen.

Der Aufbau eines solchen Isolierrohrs 5 ist in Fig.2 dargestellt. Ersichtlich weist das Rohr 5 ein mechanisch tragendes Kunststoffrohr 50 aus einem faserverstärkten Polymer sowie eine vom Kunststoffrohr koaxial gehaltene Diffusionsbarriere 51 auf. Das Kunststoffrohr 50 weist einen Innendurchmesser von mehreren, beispielsweise 5, Zentimetern und eine Länge von wenigen, beispielsweise 2 oder 3, Dezimetern auf und enthält einen etwa durch Wickeln von Fäden oder Geweben aus Glas- Keramik- und/oder Kunststoffaser, insbesondere auf der Basis Aramid, Polyamid oder Polyester, erzeugten Faserkörper, welcher in ein gehärtetes Duromer, etwa ein Epoxid oder ein Polyester, eingebettet ist. Typische Wändstärken des Kunststoffrohrs betragen 3 bis 10 mm.

Bei der in Fig..2 dargestellten Ausführungsform des Isolierrohrs 5 ist die Diffusionsbarriere 51 als Glas- oder Keramikrohr mit einer Wandstärke von typischerweise 1 bis 3 mm ausgebildet. Aus fertigungstechnischen Gründen ist dieses Rohr von einem gegenüber aggressiven Stoffen auch bei Temperaturen höher 100°C inertem Glas, etwa einem Borosilikat- oder Quarzglas, gefertigt und ist an der Innenseite des Kunststoffrohrs 50 angeordnet. Im Inneren des Kühlelements 1 vorgesehene Substanzen, wie das Arbeitsmittel und das gegebenenfalls vorgesehenes Hilfsgas, können daher nicht in das Kunststoffrohr 50 eindiffundieren oder durch dieses hindurchdiffundieren. Umgekehrt können das Kühlelement 1 umgebende Substanzen, wie Luft oder Wasser, nicht ins Innere des Kühlelements 1 gelangen.

Zwischen dem Kunststoffrohr 50 und der als Glas- oder Keramikrohr ausgebildeten Diffusionsbarriere 51 ist eine reversibel verformbare Dämpfungsschicht 52 angeordnet. Da das Kühlelement 1 je nach Einsatzort der Hochspannungsanlage 20 Temperaturen zwischen -40° und 105°C ausgesetzt sein kann, ist als Dämpfungsschicht 52 im allgemeinen ein elastomeres Polymer, z. B. auf der Basis Silikon, vorgesehen. Die Dämpfungsschicht stellt zugleich auch eine Klebverbindung zwischen Kunststoffrohr 50 und Diffusionsbarriere 51 her. Mit einer Wandstärke von mindestens ca.1 mm wird mit der Dämpfungsschicht 52 im allgemeinen ein ausreichender Schutz der Diffusionsbarriere 51 vor unerwünscht hoher Spannungsbeanspruchung erreicht.

Die Innenfläche der als Glas- oder Keramikrohrs ausgebildeten Diffusionsbarriere 51 ist mit einem Splitterschutz 53 abgedeckt, welcher mit Vorteil von einer Folie, beispielsweise auf der Basis von PTFE, gebildet ist. Ein solcher Splitterschutz verhindert das Abfallen von Splittern, falls die im allgemeinen aus sprödem Material, wie etwa Glas oder Keramik, bestehende Diffusionsbarriere 51 durch unsachgemässe Behandlung oder während des Betriebs des Kühlelements beschädigt wurde und Risse und/oder Sprünge aufweist, die deren mechanische Festigkeit zwar herabsetzen, aber deren Diffusionseigenschaften nicht wesentlich beeinträchtigen. Der Splitterschutz 53 kann unmittelbar auf die Innenfläche des Glas- oder Keramikrohrs aufgeklebt oder aufgetragen werden. Bei Ausbildung als flexible Folie kann er mit geringer Vorspannung als ein- oder zweilagiges Rohr gewickelt und nach Einschieben in das Glas- und Keramikrohr mit Hilfe der Vorspannkraft an der Innenfläche dieses Rohrs festgesetzt werden.

Die Diffusionsbarriere kann auch als flexible Folie auf der Basis von Glas und/oder Keramik ausgebildet sein und bei der Herstellung des Kunststoffrohrs 50 in den Faserkörper eingebettet werden. Für eine gute mechanische Festigkeit ist es gegebenenfalls vorteilhaft, dass die Folie einen Träger auf der Basis eines Polymers enthält, auf dem als diffusionshemmender Werkstoff flexibles Glas oder flexible Keramik gehalten sind.

Auf der Innenseite der Diffusionsbarriere kann gegebenenfalls auch eine in Fig.2 angedeutete Kapillarstruktur 54 angebracht werden, welche einen Betrieb des Kühlelements 1 auch entgegen der Schwerkraft ermöglicht.

Die Beschirmung 55 kann in die Mantelfläche des Kunststoffrohr 50 eingeformt oder auf diese Mantelfläche, etwa durch Umguss oder durch Aufschrumpfen, aufgebracht werden. Die Beschirmung verlängert den Kriechweges an der Aussenseite des Isolierrohrs 5 und reduziert das Risiko von Oberflächenüberschlägen wesentlich.

An beiden Enden des Kunststoffrohrs 2 ist jeweils eine von zwei Metallarmaturen 56, 56' vakuumfest gehalten. Ersichtlich ist die Metallarmatur 56 bzw. 56' mit Hilfe einer auf einer beider Stirnseiten des Kunststoffrohrs 50 angebrachten Verbindungsschicht 57 bzw. 57' mit dem Kunststoffrohr verklebt. Eine solche Verbindungsschicht besteht im allgemeinen aus einem gehärtete Polymer, etwa auf der Basis Epoxid, und gewährleistet neben der Verbindungsfunktion auch den Schutz der im allgemeinen spanabhebend nachbearbeiteten und daher ungeschützte Fasern aufweisenden Stirnfläche des Kunststoffrohrs 50. Zur Erhöhung der Festigkeit der Klebverbindung ist die Verbindungsschicht 57 bzw. 57' auf einen an die Stirnseite anschliessenden Abschnitt der Mantelfläche des Kunststoffrohrs 50 geführt. Ersichtlich tragen die beiden Metallarmaturen 56 und 56' an den einander zugewandeten Enden jeweils eine ringförmig um das Kunststoffrohr 50 geführte Abschirmelektrode 58 bzw. 58'. Gegebenenfalls vorhandene scharfe Kanten an den Enden des Kunststoffrohrs 50 und der Diffusionsbarriere 51 sind so elektrisch abgeschirmt. Zugleich wird so eine in Fig.2 mit dem Bezugszeichen I gekennzeichnete Isolationsstrecke definiert. Wie in Fig.2 gestrichelt angedeutet ist, kann dann beim Fertigen des Kühlelements 1 an die Metallarmatur 56 - gegebenenfalls unter Zwischenschaltung eines Faltenbalgs - der Verdampfer 3 und an die Metallarmatur 56' - gegebenenfalls ebenfalls unter Zwischenschaltung eines Faltenbalgs - der Kondensator 4 vakuumfest angeflanscht werden.

Ist die Diffusionsbarriere 51 als Rohr ausgebildet, so wird bei der Fertigung des Isolierhohlrohrs 5 auf die Mantelfläche der Diffusionsbarriere zunächst mit Polymer vorimprägniertes oder nicht imprägniertes Fasermaterial gewickelt. Ein so gebildete Vorformkörper wird dann in eine Form eingebracht. Wird nicht imprägniertes Fasermaterial verwendet, so wird der Vorformkörper mit Polymer getränkt. Danach wird der getränktes oder vorimprägniertes Fasermaterial enthaltende Vorformkörper bei erhöhter Temperatur in der Form ausgehärtet.

In einem anderen Fertigungsverfahren wird auf die Mantelfläche eines entfernbaren Wickelkerns mit Polymer vorimprägniertes oder nicht imprägniertes Fasermaterial gewickelt. Beim Wickeln werden in das Fasermaterial folienförmig ausgebildete Abschnitte der Diffusionsbarriere eingelegt. Der so gebildeter Vorformkörper wird wie zuvor beschrieben in einer Form angeordnet und im Falle eines nicht imprägniertes Fasermaterial enthaltenden Vorformkörpers mit dem Polymer getränkt. Das durch Vorimprägnieren oder Tränken eingebrachte Polymer wird bei erhöhter Temperatur in der Form ausgehärtet.

Bei beiden Verfahren können die Metallarmaturen 56 und 56' während des Härtens des Polymers unter Bildung der Verbindungsschichen 57 und 57' am Kunststoffrohr 50 festgesetzt werden.

Das Isolierrohr 5 kann auch aus einem vorgefertigten Kunststoffrohr 50 und einer als Rohr ausgebildeten, vorgefertigten Diffusionsbarriere 51 hergestellt werden. Bei diesem Herstellprozess werden der Aussendurchmesser der Diffusionsbarriere 51 und der Innendurchmesser des Kunststoffrohrs 50 - etwa durch spanabhebendes - Bearbeiten aneinander angepasst. Nach Einschieben der Diffusionsbarriere in das Kunststoffrohr werden beide Rohre miteinander verklebt. Bei diesem Verfahren kann der Splitterschutz 53 schon bei der Herstellung der Diffusionsbarriere 51 auf deren Innenseite aufgebracht werden. Dies gilt auch für die Beschirmung 55, welche bereits in das vorgefertigte Kunststoffrohr 50 eingeformt sein kann oder auf deren Mantelfläche durch Umgiessen mit einem Polymer, beispielsweise einem Silikon, oder durch Aufschrumpfen eines polymeren Hohlkörpers, aufgebracht werden kann. Die Metallarmaturen 56 und 56' können durch Verkleben am Kunststoffrohr 50 festgesetzt werden.

### BEZUGSZEICHENLISTE

- 1: Kühlelement
- 3: Verdampfer
- 4: Kondensator
- 5: Isolierrohr
- 20: Hochspannungsanlage
- 21: Stromleiter
- 22: Metallkapselung
- 50: Kunststoffrohr
- 51: Diffusionsbarriere
- 52: Dämpfungsschicht
- 53: Splitterschutz
- 54: Kapillarstruktur
- 55: Beschirmung
- 56, 56': Metallarmaturen
- 57, 57': Verbindungsschichten
- 58, 58': Abschirmelektroden
- G: Generatorschalter
- T: Trennschalter

## Patentansprüche

1. Isolierrohr (5) mit einem mechanisch tragenden Kunststoffrohr (50) aus einem faserverstärkten Polymer zur Verwendung in einem mit Hochspannung belastbaren Kühlelement, bei dessen Betrieb das Isolierrohr (5) eine elektrische Isolierstrecke (I) bildet und im Rohrinneren ein als Flüssigkeit und/oder Dampf strömendes Arbeitsmittel führt, **dadurch gekennzeichnet, dass** das Isolierrohr (5) eine vom Kunststoffrohr (50) koaxial gehaltene Diffusionsbarriere (51) aufweist.

2. Isolierrohr nach Anspruch 1, **dadurch gekennzeichnet, dass** die Diffusionsbarriere (51) als Glas- oder Keramikrohr ausgebildet ist.

3. Isolierrohr nach Anspruch 2, **dadurch gekennzeichnet, dass** das Glas- oder Keramikrohr (51) an der Innenseite des Kunststoffrohrs (50) angeordnet ist.

4. Isolierrohr nach Anspruch 3, **dadurch gekennzeichnet, dass** zwischen Kunststoffrohr (50) und Glas- oder Keramikrohr (51) eine reversibel verformbare Dämpfungsschicht (52) angeordnet ist.

5. Isolierrohr nach einem der Ansprüche 2 bis 4, **dadurch gekennzeichnet, dass** die Innenfläche des Glas- oder Keramikrohrs mit einem vorzugsweise als Folie ausgebildeten Splitterschutz (53) abgedeckt ist.

6. Isolierrohr nach Anspruch 1, **dadurch gekennzeichnet, dass** die Diffusionsbarriere (51) als flexible Folie auf der Basis von Glas und/oder Keramik ausgebildet ist.

7. Isolierrohr nach Anspruch 6, **dadurch gekennzeichnet, dass** die Folie einen Träger auf der Basis eines Polymers enthält.

8. Isolierrohr nach einem der Ansprüche 1 bis 7, **dadurch gekennzeichnet, dass** auf einer Innenfläche der Diffusionsbarriere (51) eine Kapillarstruktur (54) angebracht ist.

9. Isolierrohr nach einem der Ansprüche 1 bis 8, **dadurch gekennzeichnet, dass** das Kunststoffrohr (50) eine Beschirmung (55) trägt.

10. Isolierrohr nach einem der Ansprüche 1 bis 9, **dadurch gekennzeichnet, dass** an beiden Enden des Kunststoffrohrs (50) jeweils eine von zwei Metallarmaturen (56, 56') vakuumfest gehalten ist.

11. Isolierrohr nach Anspruch 10, **dadurch gekennzeichnet, dass** mindestens eine beider Metallarmaturen (56, 56') mit Hilfe einer auf einer Stirnseite des Kunststoffrohrs (50) angebrachten Verbindungsschicht (57, 57') mit dem Kunststoffrohr (50) verklebt ist.

12. Isolierrohr nach einem Anspruch 11, **dadurch gekennzeichnet, dass** die Verbindungsschicht (57, 57') auf einen Abschnitt der Mantelfläche des Kunststoffrohrs (50) geführt ist.

13. Isolierrohr nach einem der Ansprüche 10 bis 12, **dadurch gekennzeichnet, dass** die beiden Metallarmaturen (56, 56') an den einander zugewandeten Enden jeweils eine ringförmig um das Kunststoffrohr (50) geführte Abschirmelektrode (58, 58') tragen.

14. Kühlelement mit einem Isolierrohr nach einem der Ansprüche 10 bis 13, **dadurch gekennzeichnet, dass** die erste (56) beider Metallarmaturen mit einem von einem Stromleiter (21) einer Hochspannungsanlage (20) heizbaren Verdampfer (3) und die zweite (56') mit einem an einer geerdeten Kapselung (22) der Anlage (20) angeordneten Kondensator (4) verbunden ist.

15. Verfahren zur Herstellung des Isolierrohrs (5) nach Anspruch 1, **dadurch gekennzeichnet, dass** unter Bildung eines Vorformkörpers auf eine Mantelfläche einer als Rohr (51) ausgebildeten Diffusionsbarriere (51) mit Polymer vorimprägniertes oder nicht imprägniertes Fasermaterial gewickelt wird, dass der so gebildete Vorformkörper in einer Form angeordnet und im Falle des nicht imprägniertes Fasermaterial enthaltenden Vorformkörpers mit Polymer getränkt wird, und dass das durch Vorimprägnierung oder Tränken eingebrachte Polymer bei erhöhter Temperatur in der Form ausgehärtet wird.

16. Verfahren zur Herstellung des Isolierrohrs nach Anspruch 1, **dadurch gekennzeichnet, dass** auf eine Mantelfläche eines entfernbaren Wickelkerns mit Polymer vorimprägniertes oder nicht imprägniertes Fasermaterial aufgewickelt wird, dass beim Wickeln in das Fasermaterial folienförmig ausgebildete Abschnitte der Diffussionsbarriere (51) eingelegt werden, dass ein so gebildeter Vorformkörper in einer Form angeordnet und im Falle eines nicht imprägniertes Fasermaterial enthaltenden Vorformkörpers mit dem Polymer getränkt wird, und dass das durch Vorimprägnieren oder Tränken eingebrachte Polymer bei erhöhter Temperatur in der Form ausgehärtet wird.

17. Verfahren zur Herstellung des Isolierrohrs nach Anspruch 1, **dadurch gekennzeichnet, dass** das Kunststoffrohr (50) und eine als Rohr (51) ausgebildete Diffusionsbarriere (51) vorgefertigt werden, dass der Aussendurchmesser der Diffusionsbarriere (51) und der Innendurchmesser des Kunststoffrohrs (50) aneinander angepasst werden, und dass nach Einschieben der Diffusionsbarriere (51) in das Kunststoffrohr (50) beide Rohre (50, 51) miteinander verklebt werden.

18. Verfahren nach einem der Ansprüche 15 bis 17, **dadurch gekennzeichnet, dass** bei Ausbildung der Diffusionsbarriere als Glas- oder Keramikrohr (51) auf der Innenseite dieses Rohrs ein Splitterschutz (53) aufgebracht wird.

19. Verfahren nach einem der Ansprüche 15 bis 18, **dadurch gekennzeichnet, dass** in die Mantelfläche des Kunststoffrohrs (50) eine Beschirmung (55) eingeformt oder auf die Mantelfläche des Kunststoffrohrs (50) eine Beschirmung (55) aufgebracht wird.

20. Verfahren nach einem der Ansprüche 15 bis 19, **dadurch gekennzeichnet, dass** beim Härten des Polymers oder nach Fertigen des Kunststoffrohrs (50) zwei jeweils als Metallarmatur (56, 56') ausgebildete Endabschnitte des Isolierrohrs (5) am Kunststoffrohr (50) festgesetzt werden.

## Claims

1. Insulating tube (5) having a mechanically load-bearing plastic tube (50) composed of a fiber-reinforced polymer for use in a cooling element which can be loaded with high voltage, during whose operation the insulating tube (5) forms an electrical isolation gap (I) and in the tube interior carries an agent which flows as a liquid and/or vapor, **characterized in that** the insulating tube (5) has a diffusion barrier (51) which is held coaxially by the plastic tube (50).

2. Insulating tube according to Claim 1, **characterized in that** the diffusion barrier (51) is in the form of a glass or ceramic tube.

3. Insulating tube according to Claim 2, **characterized in that** the glass or ceramic tube (51) is arranged on the inside of the plastic tube.

4. Insulating tube according to Claim 3, **characterized in that** a reversibly deformable damping layer (52) is arranged between the plastic tube (50) and the glass or ceramic tube (51).

5. Insulating tube according to one of Claims 2 to 4, **characterized in that** the inner surface of the glass or ceramic tube is covered with fragmentation protection (53), preferably in the form of a film.

6. Insulating tube according to Claim 1, **characterized in that** the diffusion barrier (51) is in the form of a flexible film based on glass and/or ceramic.

7. Insulating tube according to Claim 6, **characterized in that** the film contains a support based on a polymer.

8. Insulating tube according to one of Claims 1 to 7, **characterized in that** a capillary structure (54) is applied to an inner surface of the diffusion barrier (51).

9. Insulating tube according to one of Claims 1 to 8, **characterized in that** the plastic tube (50) is fitted with a shield (55).

10. Insulating tube according to one of Claims 1 to 9, **characterized in that** one of two metal fittings (56, 56') is held in a vacuum-tight manner at each of the two ends of the plastic tube (50).

11. Insulating tube according to Claim 10, **characterized in that** at least one of the two metal fittings (56, 56') is adhesively bonded to the plastic tube with the aid of a connection layer (57, 57') which is applied to one end face of the plastic tube (50).

12. Insulating tube according to Claim 11, **characterized in that** the connection layer (57, 57') is guided on a section of the casing surface of the plastic tube (50).

13. Insulating tube according to one of Claims 10 to 12, **characterized in that** the two metal fittings (56, 56') are fitted with a shielding electrode (58, 58'), which is passed in an annular shape around the plastic tube (50), at each of the mutually facing ends.

14. Cooling element having an insulating tube according to one of Claims 10 to 13, **characterized in that** the first (56) of the two metal fittings is connected to a vaporizer (3), which can be heated by an electrical conductor (21) of a high-voltage installation (20), and the second (56') is connected to a condenser (4), which is arranged on grounded encapsulation (22) of the installation (20).

15. Method for production of the insulating tube (5) according to Claim 1, **characterized in that** fiber material which has been pre-impregnated with polymer or has not been impregnated is wound on a casing surface of a diffusion barrier (51), which is in the form of a tube, forming a preformed body, **in that** the preformed body formed in this way is arranged in a mold and is soaked with polymer in the situation in which the preformed body does not contain impregnated fiber material, and **in that** the polymer which is introduced by pre-impregnation or soaking is cured in the mold at a raised temperature.

16. Method for production of the insulating tube according to Claim 1, **characterized in that** fiber material which has been pre-impregnated with polymer or has not been impregnated is wound onto a casing surface of a removable winding core, **in that**, during the winding process, sections of the diffusion barrier (51) which are in the form of films are inserted into the fiber material, **in that** a preformed body which is formed in this way is arranged in a mold and is soaked with the polymer in the situation in which the preformed body does not contain impregnated fiber material, and **in that** the polymer which is introduced by pre-impregnation or soaking is cured in the mold at a raised temperature.

17. Method for production of the insulating tube according to Claim 1, **characterized in that** the plastic tube (50) and a diffusion barrier (51) which is in the form of a tube are prefabricated, **in that** the external diameter of the diffusion barrier (51) and the internal diameter of the plastic tube are matched to one another, and **in that**, after the diffusion barrier (51) has been inserted into the plastic tube (50), the two tubes (50, 51) are adhesively bonded to one another.

18. Method according to one of Claims 15 to 17, **characterized in that** fragmentation protection is applied to the inside of the tube if the diffusion barrier (51) is in the form of a glass or ceramic tube.

19. Method according to one of Claims 15 to 18, **characterized in that** a shield (55) is formed in the casing surface of the plastic tube (50), or a shield (55) is applied to the casing surface of the plastic tube (50).

20. Method according to one of Claims 15 to 19, **characterized in that**, during the curing of the polymer or after manufacture of the plastic tube (50), two end sections of the insulating tube (5), which are each in the form of metal fittings (56, 56'), are fixed to the plastic tube (50).

## Revendications

1. Tube isolant (5) qui présente un tube (50) mécaniquement porteur en matière synthétique, constitué d'un polymère renforcé de fibres et destiné à être utilisé dans un élément de refroidissement pouvant être soumis à une haute tension et dans lequel, en fonctionnement, le tube isolant (5) forme un parcours (I) électriquement isolant et conduit à l'intérieur du tube un agent de travail liquide et/ou vapeur en écoulement,
**caractérisé en ce que**
le tube isolant (5) présente une barrière (51) à la diffusion maintenue coaxialement par rapport au tube (50) en matière synthétique.

2. Tube isolant selon la revendication 1, **caractérisé en ce que** la barrière (51) à la diffusion est configurée sous la forme d'un tube en verre ou en céramique.

3. Tube isolant selon la revendication 2, **caractérisé en ce que** le tube (51) en verre ou en céramique est disposé sur le côté intérieur du tube (50) en matière synthétique.

4. Tube isolant selon la revendication 3, **caractérisé en ce qu'**une couche d'amortissement (52) déformable de manière réversible est disposée entre le tube (50) en matière synthétique et le tube (51) en verre ou en céramique.

5. Tube isolant selon l'une des revendications 2 à 4, **caractérisé en ce que** la surface intérieure du tube en verre ou en céramique est recouverte par une protection (53) contre les éclats configurée de préférence en forme de feuille.

6. Tube isolant selon la revendication 1, **caractérisé en ce que** la barrière (51) à la diffusion est configurée sous la forme d'une feuille flexible à base de verre et/ou de céramique.

7. Tube isolant selon la revendication 6, **caractérisé en ce que** la feuille contient un support à base de polymère.

8. Tube isolant selon l'une des revendications 1 à 7, **caractérisé en ce qu'**une structure capillaire (54) est appliquée sur la surface intérieure de la barrière (51) à la diffusion.

9. Tube isolant selon l'une des revendications 1 à 8, **caractérisé en ce que** le tube (50) en matière synthétique porte un écran (55).

10. Tube isolant selon l'une des revendications 1 à 9, **caractérisé en ce qu'**une de deux armatures métalliques (56, 56') résistantes au vide est maintenue à chacune des deux extrémités du tube (50) en matière synthétique.

11. Tube isolant selon la revendication 10, **caractérisé en ce qu'**au moins une des deux armatures métalliques (56, 56') est collée au tube (50) en matière synthétique à l'aide d'une couche de liaison (57, 57') appliquée sur le côté frontal du tube (50) en matière synthétique.

12. Tube isolant selon la revendication 11, **caractérisé en ce que** la couche de liaison (57, 57') est passée sur une partie de la surface d'enveloppe du tube (50) en matière synthétique.

13. Tube isolant selon l'une des revendications 10 à 12, **caractérisé en ce que** les deux armatures métalliques (56, 56') portent sur chacune des extrémités tournées l'une vers l'autre une électrode de blindage (58, 58') passée de façon annulaire autour du tube (50) en matière synthétique.

14. Elément de refroidissement doté d'un tube isolant selon l'une des revendications 10 à 13, **caractérisé en ce que** la première (56) des deux armatures métalliques est reliée à un évaporateur (3) qui peut être chauffé par un conducteur de courant (21) d'une installation (20) à haute tension et la deuxième (56') est reliée à un condensateur (4) disposé sur une encapsulation (22) raccordée à la terre de l'installation (20).

15. Procédé de fabrication du tube isolant (5) selon la revendication 1,
**caractérisé en ce que**
en formant un corps d'ébauche, un matériau fibreux pré-imprégné ou non imprégné de polymère est enroulé sur la surface d'enveloppe d'une barrière (51) à la diffusion configurée sous la forme d'un tube (51),
**en ce que** le corps d'ébauche ainsi formé est placé dans un moule,
**en ce que** le corps d'ébauche est imprégné d'un polymère au cas où il contient un matériau fibreux non imprégné et
**en ce que** le polymère apporté par pré-imprégnation ou imprégnation est durci à haute température dans le moule.

16. Procédé de fabrication du tube isolant selon la revendication 1, **caractérisé en ce qu'**un matériau fibreux pré-imprégné ou non imprégné de polymère est enroulé sur la surface d'enveloppe d'une âme d'enroulement apte à être enlevée, **en ce que** lors de l'enroulement, des tronçons en forme de feuille de la barrière (51) à la diffusion sont placés dans le matériau fibreux, **en ce que** le corps d'ébauche ainsi formé est placé dans un moule, **en ce que** le corps d'ébauche est imprégné de polymère au cas où il contient un matériau fibreux non imprégné et **en ce que** le polymère amené par pré-imprégnation ou imprégnation est durci à haute température dans le moule.

17. Procédé de fabrication du tube isolant selon la revendication 1, **caractérisé en ce que** le tube (50) en matière synthétique et une barrière (51) à la diffusion configurée sous la forme d'un tube (51) sont préfabriqués, **en ce que** le diamètre extérieur de la barrière (51) à la diffusion et le diamètre intérieur du tube (50) en matière synthétique sont adaptés l'un à l'autre et **en ce que** les deux tubes (50, 51) sont collés l'un à l'autre après insertion de la barrière (51) à la diffusion dans le tube (50) en matière synthétique.

18. Procédé selon l'une des revendications 15 à 17, **caractérisé en ce que** lorsque la barrière à la diffusion est configurée sous la forme d'un tube (51) en verre ou en céramique, une protection (53) contre les éclats est formée sur le côté intérieur de ce tube.

19. Procédé selon l'une des revendications 15 à 18, **caractérisé en ce qu'**un écran (55) est moulé dans la surface d'enveloppe du tube (50) en matière synthétique ou **en ce qu'**un écran (55) est appliqué sur la surface d'enveloppe du tube (50) en matière synthétique.

20. Procédé selon l'une des revendications 15 à 19, **caractérisé en ce que** lors du durcissement du polymère ou après fabrication du tube (50) en matière synthétique, deux tronçons d'extrémité du tube isolant (5) configurés tous deux sous la forme d'une armature métallique (56, 56') sont fixés sur le tube (50) en matière synthétique.
